# EUROPEAN PATENT SPECIFICATION

(11) **EP 2 344 425 B1**
(45) Date of publication and mention of the grant of the patent: **21.11.2018**
(21) Application number: 09814894.3
(22) Date of filing: 17.09.2009
(51) Int. Cl.: C02F 3/28, C02F 3/30, C02F 3/34

(54) **ANAEROBIC PROCESS FOR TREATING ORGANIC MATERIAL TO GENERATE BIOGAS**
ANAEROBES VERFAHREN ZUR BEHANDLUNG VON ORGANISCHEM MATERIAL ZUR ERZEUGUNG VON BIOGAS
PROCÉDÉ ANAÉROBIE POUR TRAITER UN MATÉRIAU ORGANIQUE AFIN DE GÉNÉRER DU BIOGAZ

(30) Priority: 18.09.2008 US 192357 P
(43) Date of publication of application: 20.07.2011
(73) Proprietor: Neozyme Inernational, Inc., Costa Mesa, CA 92627 (US)
(72) Inventor: DALE, Parker, Newport Beach, CA 92660 (US); PARKER, David Dale, New York, NY 10128 (US); JOHNSTON, Jay, M., Pottsville, PA 17901 (US)
(74) Representative: Schlich, George
(86) International application number: PCT/US2009/005188
(87) International publication number: WO 2010/033203

(56) References cited:
- WO-A1-2004/108609
- US-A- 3 635 797
- US-A- 5 500 306
- US-A- 5 500 306
- US-A- 5 879 928
- US-A- 5 879 928
- US-A1- 2006 201 877
- US-B1- 6 884 351
- COELHO ET AL. ENERGY GENERATION BY A RENEWABLE SOURCE - SEWAGE BIOGAS, [Online] 17 November 2006, XP008146808 Retrieved from the Internet: <URL:http://www.google.com/search?hl=en&sou rce=hp&q=Energy+Generation+by+a+Renewable+S ource+%E2%80%93+Sewage+Biogas&btnG=Google+S earch&aq=f&oq=&aqi=> [retrieved on 2009-11-25]

## Description

### Background of the Invention

### 1. Field of the Invention

The invention relates to a process for biologically treating a fluid which contains organic materials, in particular sewage sludge from the treatment of municipal waste waters and the like, under anaerobic conditions, to remove volatile solids and generate biogas.

### 2. Description of the Related Art

Since the passage of the Clean Water Act many industries have been required to institute treatment programs for the waste water they generate before these waters are discharged into public drains and waterways. These programs often include on-site waste water treatment processes, discharge into public treatment works or both.

Waste water is the term used for water which has been changed after household, commercial and industrial use, in particular water which is contaminated and flows and passes into the drainage channels.

Waste water typically contains a wide variety of contaminants which must be removed prior to discharge into public waterways and such contaminants include: organic matter, such as proteins, carbohydrates and lipids; chemicals, such as pesticides, insecticides, heavy metals and fertilizers; and sewage. The waste water is typically assessed in terms of its biochemical oxygen demand (BOD), total suspended solids (TSS) and dissolved oxygen (DO). Another important class of constituents that must be removed from waste water is the volatile organic comprises compounds (VOC) which cause or contribute to the odor of waste water.

A number of processes have been developed which are directed at specific contaminants found in waste water, for example: phenol oxidases and hydrogen peroxide have been used to decolorize pulp and paper mill waste water (U.S. Pat. No. 5,407,577); enzymes from an atypical strain of *Bacillus stearothermophilus* have been used to degrade algal cell walls (U.S. Pat. No. 5,139,945); a combination of bacteria and enzymes have been used to improve the water quality of standing bodies of water (U.S. Pat. No. 5,227,067); cellulases have been used to digest wood/paper compositions (U.S. Pat. No. 5,326,477); *Xanthomonas maltophilia* and *Bacillus thuringiensis* have been used to degrade polar organic solvents (U.S. Pat. No. 5,369,031); yeast has been used to digest carbohydrate-containing waste water (U.S. Pat. No. 5,075,008); a combination of beta-glucanase, alpha-amylase and proteases have been used to digest microbial slime (U.S. Pat. No. 5,071,765); and a combination of amylase, lipase and/or proteases have been used to digest colloidal material such as starch, grease, fat and protein (U.S. Pat. No. 5,885,950). However, each of these compositions are directed at only a specific contaminant and they do not address the variety of contaminants which are usually found in waste water and other polluted water. A composition described in U.S. Pat. No. 3,635,797 used a yeast fermentation composition to deodorize sewage ponds and degrade organic waste. However, this composition has been found to be unstable and yielded variable results from one batch to another.

US 2006/201877 describes a composition including the fermentation supernatant from a fermentation of yeast which is intended to be conveniently introduced through the wastewater plumbing system of a private home or other facility into a septic system servicing the home or other facility to substantially accelerate the ability of bacteria resident in the septic system to substantially digest biologically available organic compounds present in the septic system.

The above processes are generally carried out under aerobic conditions, that is, the treating process requires the presence of oxygen, usually from air.

The present inventors have developed a liquid composition comprising a fermentation supernatant containing active enzymes from a Saccharomyces cerevisiae culture; preservatives selected from the group consisting of sodium benzoate, imidazolidinyl urea, diazolidinyl urea and mixtures thereof; calcium chloride; and a non-ionic surfactant selected from the group consisting of ethoxylated alkylphenols. This liquid composition has been
used under aerobic conditions to treat, among other liquids, municipal sewage. (See US Patent Numbers 5,820,758; 5,849,566; 5,879,928 and 5,885,590.)

The biological treatment of liquids contaminated with organic materials or the purification of waste water to remove organic contaminants, which contaminants are contained in the liquids in a dissolved, colloidal or finely dispersed form, by microbial activity, e.g. by anaerobic degradation, generates a combustible gas, known as biogas.

Generally, waste water is biologically purified in waste treatment plants using the same or similar procedures which occur when the waste water biologically cleans itself in running waters, i.e. under aerobic conditions, albeit, in a technically more intensive manner. In nature, the anaerobic process of biological purification likewise occurs, e.g. at the bottom of flat, still waters.

For the purposes of defining the present invention the terms 'anaerobic degradation', 'anaerobic process', 'anaerobic conditions' etc. are understood to mean the conversion of organic materials by means of micro-organisms, e.g. bacteria, while excluding oxygen. As stated above, during the process of anaerobic degradation of organic materials, biogas is produced, i.e. a gas mixture which consists of methane, mainly, and carbon dioxide and traces of other ingredients.

Methods for biologically treating liquids, containing high amounts of organic materials as contaminants, under anaerobic conditions are known for treating waste waters from the foodstuff industry, agriculture, mineral oil industry as well as from pulp making. In other words, they it is possible to treat many liquids but, in general, such known biological methods are incapable of providing a full purification or complete conversion of such organic contaminants.

It is one object of this invention to treat an organic waste material, in a bacterial process, while excluding oxygen, by digesting said waste at an elevated temperature to produce biogas, which biogas can be used in generators for electricity production and/or in boilers for heating purposes.

It is another object of the invention to treat sewage sludge in a bacterial process that is carried out while excluding oxygen by fermenting said sludge at an elevated temperature to produce a biogas, which can then be used in generators for electricity production and/or in boilers for heating purposes and, in particular said biogas may be used to provide the heat to treat said sewage sludge.

It is another object of the invention to treat sewage sludge in a bacterial process that is carried out, while excluding oxygen, by fermenting said sludge at an elevated temperature to reduce the volatile organic solids (VOS).

It is another object of the invention to treat sewage sludge in a bacterial process that is carried out, while excluding oxygen, by fermenting said sludge at an elevated temperature to reduce the weight and/or volume of the treated, solid sludge product leaving the process.

Other objects of this invention will become apparent from a reading of the present specification.

### Summary of the Invention

The present invention provides a process for the treatment of organic waste materials for production of biogas, which process comprises a bacterial process that is carried out under anaerobic conditions, and wherein said bacterial process comprises digestion, in which said waste is fermented in tanks, wherein the organic waste is treated with a composition comprising (i) a fermentation supernatant containing active enzymes from a Saccharomyces cerevisiae culture, (ii) a non-ionic surfactant, (iii) calcium chloride and (iv) one or more preservatives selected from the group consisting of sodium benzoate, imidazolidinyl urea, diazolidinyl urea and mixtures thereof and wherein the non-ionic surfactant is selected from the group consisting of ethoxylated alkylphenols.

In the process of this invention the organic waste may comprise sewage sludge, which is treated in a bacterial process that is carried out in the absence of oxygen and wherein said process comprises, either, thermophilic digestion, in which sludge is fermented in tanks at a temperature of about 55-60°C., or mesophilic digestion, wherein said process is carried out at a temperature of about 35-40°C. The methane in biogas can be burned to produce both heat and electricity, usually with a reciprocating engine or turbine, Fuel Cells often in a cogeneration arrangement where the electricity and waste heat generated are used to warm the digesters or to heat buildings. Excess electricity can be sold to suppliers or put into the local grid. Electricity produced by anaerobic digesters is considered to be renewable energy and may attract subsidies. Biogas does not contribute to increasing atmospheric carbon dioxide concentrations because the gas is not released directly into the atmosphere and the carbon dioxide comes from an organic source with a short carbon cycle.

In the process of the invention, a combustible biogas is produced, which comprises methane, and can be used in generators for electricity production and/or in boilers for heating purposes.

In the process of this invention said nonionic surfactant is selected from the group consisting of ethoxylated alkylphenols, e.g. said nonionic surfactant may be selected from the group consisting of ethoxylated nonylphenol and ethoxylated octyl phenol, e.g. the nonionic surfactant may be a nonyl or octyl phenol adduct comprising from 20 to 40 moles ethylene oxide, e.g. about 30 moles ethylene oxide.

### Brief Description of the Drawings

The advantages and features of the present invention will be better understood by the following description when considered in conjunction with the accompanying drawings in which:
Figure 1 shows, in block diagram form, the configuration of a typical plant for treating the effluent from a plant for manufacturing food.
Figure 2 shows the effects of treating the effluent from the food manufacturing plant of Figure 1, by the process of this invention.

### Detailed Description of the Invention

Non-ionic surfactants suitable for use in the present invention include alkyl phenols which have been ethoxylated. The non-ionic surfactant acts synergistically to enhance the action of the yeast fermentation supernatant.

The composition of the present invention is similar to that described in U.S. Pat. No. 3,635,797 to Battistoni et al. Briefly, yeast, Saccharomyces cerevisiae, is cultured in a medium comprising: a sugar source, such as sucrose from molasses, raw sugar, soybeans or mixtures thereof. A sugar concentration of about 10 to about 30%, by weight; malt such as diastatic malt at a concentration of about 7 to about 12%, by weight; a salt, such as a magnesium salt, and, in particular, magnesium sulfate, at a concentration of about 1 to about 3%, by weight, and yeast are added to the medium to obtain a final concentration of about 1 to about 5%, by weight, of yeast in the final culture mixture. The mixture is incubated at about from 26 degrees to about 42 degrees C. until the fermentation is completed, i.e. until effervescence of the mixture has ceased, usually about 2 to about 5 days depending on the fermentation temperature. At the end of the fermentation the yeast fermentation composition is centrifuged to remove the "sludge" formed during the fermentation. The supernatant (about 98.59%, by weight) is mixed with sodium benzoate (about 1%, by weight), imidazolidinyl urea (about 0.01%, by weight), diazolidinyl urea (about 0.15%, by weight), calcium chloride (about 0.25%, by weight) to form the fermentation intermediate. The pH is adjusted to from about 3.7 to about 4.2 with phosphoric acid. The composition of the fermentation intermediate is summarized in Table 1.

**TABLE I**

| Component | Fermentation Intermediate %, by weight |
|---|---|
| Fermentation supernatant | 98.59 |
| Na Benzoate | 1 |
| Imidazolidinyl urea | 0.01 |
| Diazolidinyl urea | 0.15 |
| Calcium chloride | 0.25 |
| Adjust pH | to about 3.7 to about 4.2 with phosphoric acid |

The fermentation intermediate is prepared by filling a jacketed mixing kettle with the desired quantity of the fermentation supernatant. With moderate agitation the pH is adjusted to from about 3.7 to about 4.2 with phosphoric acid. With continuous agitation, sodium benzoate, imidazolidinyl urea, diazolidinyl urea and calcium chloride are added. The temperature of the mixture is then slowly raised to about 40 degrees C and the mixture is agitated continuously. The temperature is maintained at about 40 degrees C for about one hour to ensure that all the components of the mixture are dissolved. The mixture is then cooled to form about 20 degrees to about 25 degrees C.

The fermentation intermediate is then formulated into the composition of the present invention (final composition) by mixing the fermentation intermediate (about 20.24%, by weight, of the final composition) with, preservatives such as sodium benzoate, imidazolidinyl urea, diazolidinyl urea, imidazolidinyl urea, diazolidinyl urea and mixtures thereof (about 0.16%, by weight, of the final composition), a non-ionic surfactant such as ethoxylated octyl phenol (about 9%, by weight, of the final composition) and the composition is brought to 100% by the addition of water. In a preferred embodiment of the present invention the composition comprises about 20.24%, by weight, fermentation intermediate, about 0.1%, by weight, sodium benzoate, about 0.01%, by weight, imidazolidinyl urea, about 0.15%, by weight, diazolidinyl urea, about 9%, by weight, ethoxylated octyl phenol. (See Table II).

**Table II**

| **Amounts to be Added to Fermentation Intermediate to produce Final Composition** | |
|---|---|
| **Component** | **%, by weight** |
| Sodium benzoate | 0.1 |
| Imidazolidinyl urea | 0.01 |
| Diazolidinyl urea | 0.15 |
| Ethoxylated octyl phenol | 9.00 |
| Fermentation Intermediate | 20.24 |

The method for preparing the final composition is as follows: A mixing kettle is charged with the desired volume of water at about 20 degrees to about 25 degrees C. Sodium benzoate, imidazolidinyl urea and diazolidinyl urea are added while the solution is agitated. The mixture is agitated until the solids are dispersed. Ethoxylated octyl phenol is then added and the agitation is continued. The fermentation intermediate is then added with gentle agitation. The pH is adjusted to about 3.5 to about 4.0 with phosphoric acid.

After mixing and pH adjustment, the final concentration of components in the final composition are summarized in Table III.

**Table III**

| **Final Composition** | |
|---|---|
| **Component** | **%, by weight** |
| Na benzoate | 0.3 |
| Imidazolidinyl urea | 0.012 |
| Diazolidinyl urea | 0.18 |
| Ethoxylated octyl phenol | 9 |
| Calcium chloride | 0.05 |
| Fermentation supernatant | 20 (clarified) |
| Adjust pH | to about 3.5 to 4.0 with phosphoric acid |

The final composition is diluted for use in a zone for anaerobic digestion. For use in treating waste water the final composition is diluted to as high as parts per million. For other uses it may desirable to dilute the final composition only as little as 1 in 10. Those skilled in the art are aware that dilutions of such compositions can be used and that over-dilution for a particular purpose can result in a decreased rate of digestion and that under-dilution for a particular purpose increases cost without increasing the rate of degradation. Ideally, the final composition is diluted to optimize the rate of degradation of a particular waste and to minimize costs.

In use, the composition of the present invention enhances the degradation of pollutants, presumably, by enhancing the activity of bacteria commonly found in waste water treatment plants and, unexpectedly, increases the amount of biogas generated, while decreasing the volatile odorous compounds (VOC) and the volume and weight of the effluent from the anaerobic zone. In an aerobic process, wherein the above final composition is utilized to degrade pollutants in the presence of bacteria, it is expected that DO is decreased as the bacteria metabolize the available oxygen and the surfactant and yeast fermentation supernatant act synergistically to enhance the rate of degradation and increase DO. In such aerobic process, the surfactant, alone, or the yeast fermentation supernatant, alone, does not result in the enhanced activity observed when they are combined.

However, in an anaerobic process it could not predictable what advantages, if any, would be obtained, by treating the organic waste material with the above-described final composition. However, like the aerobic process, the enhanced degradation observed in use of the final composition, in an anaerobic process is proportional to the time that the final composition is in contact with the waste water to be treated. Therefore, it is desirable that the final composition is added to the waste water at the earliest opportunity. Preferably, the final composition is added upstream of the anaerobic zone of the waste water treatment plant. The final composition may be added to the waste water by continuously pumping the final composition into the waste water or it may be added in batches as desired to reach the desired dilution of the final composition in the anaerobic zone.

The invention is further illustrated by the following examples which are illustrative of a specific mode of practicing the invention and are not intended as limiting the scope of the claims.

### EXAMPLE 1

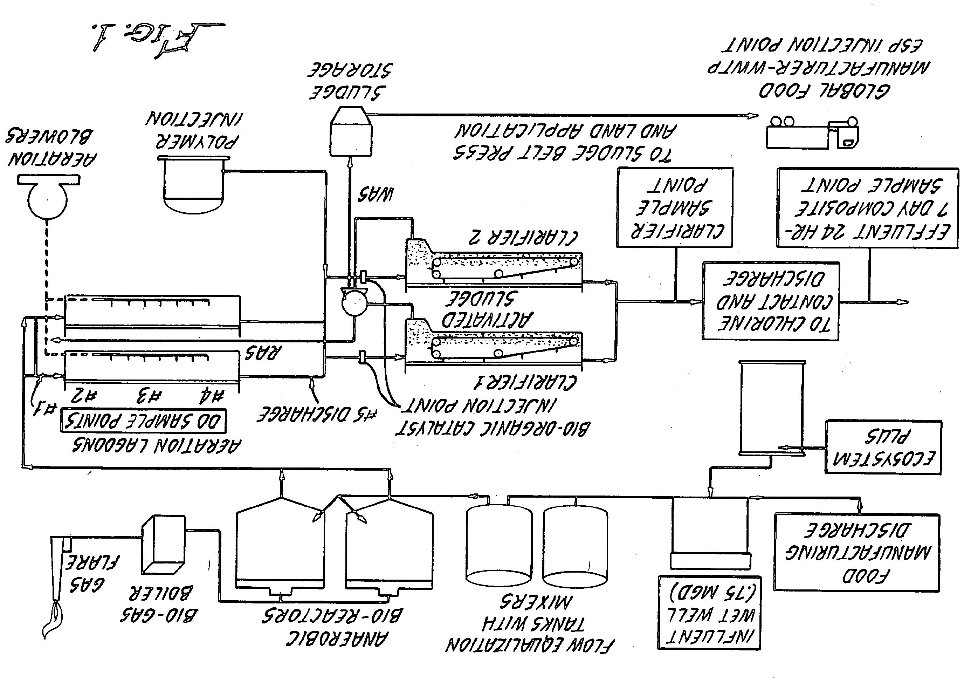

The process of the present invention may be exemplified by the treatment of the discharge from a food manufacturing plant. As shown in Figure 1, two sequential anaerobic bioreactors are in line subsequent to the influent wet well(s) where the discharge from the food manufacturing is collected.

The flow rate is 0.75 million gallons per day (MGD). In the anaerobic bioreactors, the flow from the wet wells is contacted with the final composition described above. The ratio of the flow of waste water and the final composition varies from 0.0000667% TO 0.0002667%. After treatment in the anaerobic zone, the liquid effluent from the bioreactors is led to one or more aeration lagoons for further treatment. The gaseous effluent from the bioreactors is collected and either flared or recycled (and may be treated e.g. to increase its BTU value, prior to recycling) for use in providing heat to the bioreactors and or Food processing Boiler used to generate heat steam for the manufacturing process.

It was found that treatment of the influent to the bioreactor increased the biogas, i.e. Biomethane, from 1.53 cubic foot to 1.93 cubic foot per 1b. of total chemical oxygen demand. This is a surprising increase of 26% and concomitantly the sludge volume of the effluent was reduced by 28%.

### EXAMPLE 2

In a separate example of the process of this invention, the waste water from a large cheese manufacturing plant was treated in an anaerobic digestion zone with the final product of Table 3, above, at a ratio of from 0.0220 to 0.1484 final composition of Table 3 influent. The Average residence time in the anaerobic zone was 2.72 to 4.28 Day depended on Influent Flows. The temperature during said treatment was from about 94 to about 102 degrees F. In this trial, the removal rate of the TCOD increased from 29% to 73.9%. Biomethane production increased from 1000 cubic foot per hour to 1,800 cubic foot per hour. This is a surprising increase of 80%.

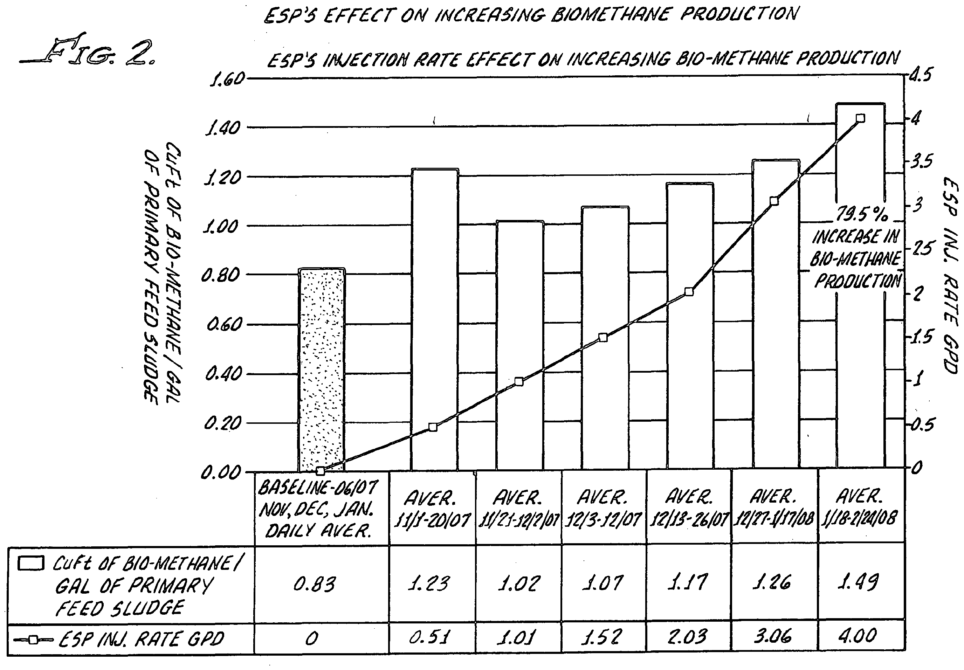

The result is reported in Figure 2.

### EXAMPLE 3

The process of the present invention was also utilized in the treatment of sewage sludge from a municipal source. In this trial the influent to the anaerobic zone of a municipal sewage treating plant was contacted with the final composition of Table 3, above, at a ratio of .0271 to .122 ESP Gals/1,000 gal Primary Feed Sludge and a temperature of 92 To 102° F. This residence time of the mixture of sewage sludge and the final composition in the anaerobic zone was 15 to 18 Days depended on Influent primary feed loading to A.D.

A typical Municipal Waste Water Treatment Facility processes 1000 gallons per day of wastewater for every person served.

Approximately 1.0 cubic foot (ft³) of digester gas is produced by an anaerobic digester per person per day.

The heating value of the biogas produced by anaerobic digesters is approximately 600 British thermal units per cubic foot (Btu/ft³).

In the present example, the following results were obtained:
T.S. Removal Rates increased by 80.9%, from 6.81% to 35.6%
T.V.S. removal rates increased by 19.2%, from 49.61% (Start of treatment with the composition of Table 3) to 61.4%
Sludge Volumes were reduced by 25%
Actual production of biogas increased 74.6%, from .81 cubic foot (ft³) to 1.42 per 100 gallons Influent Flow
There was an 88% increase, from .83 cubic foot (ft³) per gallon of primary digester feed sludge to 1.56

The present invention is not to be limited in scope by the exemplified embodiments, which are only intended as illustrations of specific aspects of the invention. Various modifications of the invention, in addition to those disclosed herein, will be apparent to those skilled in the art by a careful reading of the specification, including the claims, as originally filed. For example, while not specifically described herein, the biogas generated from the process of this invention may be used in fuel cell applications.

The Northeast Regional Biomass Program, in conjunction with XENERGY, Inc., has completed a comprehensive study examining the feasibility of utilizing bio-based fuels with stationary fuel cell technologies. The findings show that biomass-based fuel cell systems, from a technical perspective, are capable of providing a source of clean, renewable electricity over the long-term. In addition, fuel cells have proven to be successful in this application, in service around the world at several landfills and wastewater treatment plants (as well as breweries and farms), generating power from the methane gas they produce, and reducing harmful emissions in the process.

Fuel cells have been operated at landfills and wastewater treatment facilities all over the United States and in Asia. For example, Connecticut's Groton Landfill has been producing 600,000 kWh of electricity a year, with a continuous net fuel cell output of 140 kW and UTC Power's (formerly IFC/ONSI) fuel cell system at the Yonkers wastewater treatment plant in New York, produces over 1.6 million kWh of electricity per year, while releasing only 72 pounds of emissions into the environment. In Portland, Oregon, a fuel cell produces power using anaerobic digester gas from a wastewater facility, which generates 1.5 million kWh of electricity per year, substantially reducing the treatment plant's electricity bills.

Fuel Cell Energy, Inc. (FCE) is installing its Direct FuelCell® (DFC) power plants at wastewater treatment plans around the world.

Both FCE and UTC have installed fuel cells at several breweries - Sierra Nevada, Kirin, Asahi and Sapporo - using the methane-like digester gas produced from the effluent from the brewing process to power the fuel cell.

The process of the present invention can be used to generate a biogas that may be used in any of the above commercial processes to generate power from waste.

It is intended that all such modifications will fall within the scope of the appended claims.

## Claims

1. A process for the treatment of organic waste materials for production of biogas, which process comprises a bacterial process that is carried out under anaerobic conditions, and wherein said bacterial process comprises digestion, in which said waste is fermented in tanks,
wherein the organic waste is treated with a composition comprising (i) a fermentation supernatant containing active enzymes from a Saccharomyces cerevisiae culture, (ii) a non-ionic surfactant, (iii) calcium chloride and (iv) one or more preservatives selected from the group consisting of sodium benzoate, imidazolidinyl urea, diazolidinyl urea and mixtures thereof and
wherein the non-ionic surfactant is selected from the group consisting of ethoxylated alkylphenols.

2. The process of claim 1, wherein the final concentration of calcium chloride is 0.05% of the total weight of the composition, the final concentration of sodium benzoate is 0.3% of the total weight of the composition, the final concentration of imidazolidinyl urea is 0.012% of the total weight of the composition, the final concentration of diazolidinyl urea is 0.18% of the total weight of the composition and the final concentration of non-ionic surfactant is 9% of the total weight of the composition.

3. The process of any of claims 1-2, wherein the ethoxylated alkylphenol is ethoxylated nonylphenol or ethoxylated octyl phenol.

4. The process of claim 3, wherein the ethoxylated alkylphenol is an ethoxylated octyl phenol.

5. The process of any one of claims 1-4, which is carried out at a temperature of 35°C to 40°C.

6. The process of any one of claims 1-4, which is carried out at a temperature of 55°C to 60°C.

7. The process of any one of claims 1-6, wherein the amount of the composition added to the organic waste materials is in a ratio of 0.122:1000 to 0.0271:1000.

8. The process of any one of claims 1-6, wherein the amount of the composition added to the organic waste materials is from 6.67 x 10⁻⁵% to 2.667 x 10⁻⁴%.

9. The process of any one of claims 1-6, wherein the amount of the composition added to the organic waste materials is from one part per ten to one part per million.

10. The process of any one of claims 1-9, wherein the pH of the composition is from 3.5 to 4.0.

11. The process of any one of claims 1-10, wherein the organic waste material is contained in waste water or sewage sludge.

12. The process of any one of claims 1-11, wherein the enhanced rate of degradation of the organic waste materials by the bacteria is proportional to the time that the composition is in contact with the organic waste materials.

## Patentansprüche

1. Verfahren zum Behandeln von organischen Abfallmaterialien zum Herstellen von Biogas, wobei das Verfahren eine bakterielles Verfahren umfasst, welches unter anaeroben Bedingungen ausgeführt wird, und wobei das bakterielle Verfahren Vergärung umfasst, in welchem der Abfall in Tanks fermentiert wird,
wobei der organische Abfall mit einer Zusammensetzung behandelt wird, die Folgendes umfasst: (i) einen Fermentationsüberstand, der ein aktives Enzym von einer Saccharomyces cerevisiae Kultur beinhaltet, (ii) ein nichtionisches Tensid, (iii) Calciumchlorid und (iv) ein oder mehrere Konservierungsmittel, die aus der Gruppe bestehend aus Natriumbenzoat, Imidazolidinylharnstoff, Diazolidinylharnstoff und Mischungen daraus ausgewählt sind, und wobei das nichtionische Tensid aus einer Gruppe bestehend aus ethoxylierten Alkylphenolen ausgewählt ist.

2. Verfahren nach Anspruch 1, wobei die Endkonzentration des Calciumchlorids 0,05 % des Gesamtgewichts der Zusammensetzung, die Endkonzentration des Natriumbenzoats 0,3 % des Gesamtgewichts der Zusammensetzung, die Endkonzentration des Imidazolidinylhamstoffs 0,012 % des Gesamtgewichts der Zusammensetzung, die Endkonzentration des Diazolidinylharnstoffs 0,18 % des Gesamtgewichts der Zusammensetzung und die Endkonzentration des nichtionischen Tensides 9 % des Gesamtgewichts der Zusammensetzung beträgt.

3. Verfahren nach einem der Ansprüche 1-2, wobei das ethoxylierte Alkylphenol ethoxyliertes Nonylphenol oder ethoxyliertes Octylphenol ist.

4. Verfahren nach Anspruch 3, wobei das ethoxylierte Alkylphenol ethoxyliertes Octylphenol ist.

5. Verfahren nach einem der Ansprüche 1-4, das bei einer Temperatur von 35 °C bis 40 °C ausgeführt wird.

6. Verfahren nach einem der Ansprüche 1-4, das bei einer Temperatur von 55 °C bis 60 °C ausgeführt wird.

7. Verfahren nach einem der Ansprüche 1-6, wobei die Menge an Zusammensetzung, die den organischen Abfallmaterialien hinzugefügt wird, in einem Verhältnis von 0,122:1000 bis 0,0271:1000 liegt.

8. Verfahren nach einem der Ansprüche 1-6, wobei die Menge an Zusammensetzung, die den organischen Abfallmaterialien hinzugefügt wird, 6,67 x 10⁻⁵ % bis 2,667 x 10⁻⁴ % beträgt.

9. Verfahren nach einem der Ansprüche 1-6, wobei die Menge an Zusammensetzung, die den organischen Abfallmaterialien hinzugefügt wird, ein Zehntel bis ein Millionstel beträgt.

10. Verfahren nach einem der Ansprüche 1-9, wobei der pH-Wert der Zusammensetzung 3,5 bis 4,0 beträgt.

11. Verfahren nach einem der Ansprüche 1-10, wobei das organische Abfallmaterial in Abwasser oder in Klärschlamm enthalten ist.

12. Verfahren nach einem der Ansprüche 1-11, wobei die verbesserte Abbaugeschwindigkeit der organischen Abfallmaterialien durch die Bakterien proportional zu der Zeit ist, mit der die Zusammensetzung in Kontakt mit den organischen Abfallmaterialien steht.

## Revendications

1. Procédé permettant le traitement de matériaux de déchets organiques pour la production de biogaz, ledit procédé comprenant un procédé bactérien qui est effectué dans des conditions anaérobies, et ledit procédé bactérien comprenant une digestion dans laquelle lesdits déchets sont fermentés dans des réservoirs, lesdits déchets organiques étant traités avec une composition comprenant (i) un surnageant de fermentation contenant des enzymes actives provenant d'une culture de Saccharomyces cerevisiae, (ii) un agent tensioactif non ionique, (iii) du chlorure de calcium et (iv) un ou plusieurs agents conservateurs choisis dans le groupe constitué par le benzoate de sodium, l'imidazolidinylurée, la diazolidinylurée et des mélanges de ceux-ci et ledit agent tensioactif non ionique étant choisi dans le groupe constitué par des alkylphénols éthoxylés.

2. Procédé selon la revendication 1, ladite concentration finale de chlorure de calcium étant de 0,05 % du poids total de la composition, ladite concentration finale de benzoate de sodium étant de 0,3 % du poids total de la composition, ladite concentration finale d'imidazolidinylurée étant de 0,012 % du poids total de la composition, ladite concentration finale de diazolidinylurée étant de 0,18 % du poids total de la composition et ladite concentration finale d'agent tensioactif non ionique étant de 9 % du poids total de la composition.

3. Procédé selon l'une quelconque des revendications 1 à 2, ledit alkylphénol éthoxylé étant un nonylphénol éthoxylé ou un octylphénol éthoxylé.

4. Procédé selon la revendication 3, ledit alkylphénol éthoxylé étant un octylphénol éthoxylé.

5. Procédé selon l'une quelconque des revendications 1 à 4, qui est effectué à une température allant de 35°C à 40°C.

6. Procédé selon l'une quelconque des revendications 1 à 4, qui est effectué à une température allant de 55°C à 60°C.

7. Procédé selon l'une quelconque des revendications 1 à 6, ladite quantité de la composition ajoutée aux matériaux de déchets organiques étant dans un rapport allant de 0,122:1000 à 0,0271:1000.

8. Procédé selon l'une quelconque des revendications 1 à 6, ladite quantité de la composition ajoutée aux matériaux de déchets organiques allant de 6,67x10⁻⁵ % à 2,667x10⁻⁴ %.

9. Procédé selon l'une quelconque des revendications 1 à 6, ladite quantité de la composition ajoutée aux matériaux de déchets organiques allant de une part pour 10 jusqu'à une part pour un million.

10. Procédé selon l'une quelconque des revendications 1 à 9, ledit pH de la composition allant de 3,5 à 4,0.

11. Procédé selon l'une quelconque des revendications 1 à 10, lesdits matériaux de déchets organiques étant contenus dans des eaux usées ou des boues d'épuration.

12. Procédé selon l'une quelconque des revendications 1 à 11, ledit taux amélioré de dégradation des matériaux de déchets organiques par les bactéries étant proportionnel au temps pendant lequel la composition est en contact avec les matériaux de déchets organiques.
